# EUROPEAN PATENT APPLICATION

(11) **EP 4 787 755 A1**
(43) Date of publication of application: **05.08.2026**
(21) Application number: 23953394.6
(22) Date of filing: 26.09.2023
(51) Int. Cl.: H04L 5/00

(54) **SRS CARRIER SWITCHING OPERATION METHOD AND APPARATUS**

(71) Applicant: 1FINITY INC., Kawasaki-shi, Kanagawa 211-8588 (JP)
(72) Inventor: WANG, Guotong, Beijing 100022 (CN); JIANG, Qinyan, Beijing 100022 (CN); WANG, Xin, Beijing 100022 (CN); ZHANG, Lei, Beijing 100022 (CN)
(74) Representative: Haseltine Lake Kempner LLP
(86) International application number: PCT/CN2023/121525
(87) International publication number: WO 2025/065233

(57) **Abstract**

Embodiments of this disclosure provide an SRS carrier switching operation method and apparatus. The method includes: a terminal equipment receives indication information from a network device, wherein the indication information is used to trigger the terminal equipment to perform an SRS carrier switching operation; and performs the SRS carrier switching operation according to the indication information.

## Description

### Technical Field

Embodiments of this disclosure relate to the field of communication technologies.

### Background

The sounding reference signal (SRS) carrier switching operation was introduced in NR Rel-15. The SRS carrier switching is applied to a component carrier (CC) that is not configured with a PUSCH/PUCCH, i.e., a PUSCH-less cell. If a terminal equipment could not support simultaneous transmissions of PUSCH and SRS on a plurality of CCs, the terminal equipment needed to suspend a PUSCH uplink transmission on a source CC and switch to a target CC for an SRS transmission (the target CC is PUSCH-less). After transmitting an SRS, the terminal equipment switches back to the source CC.

It should be noted that the above introduction to the background is merely provided for clear and complete explanation of the technical solutions of this disclosure and for easy understanding by those skilled in the art. And it should not be understood that these technical solutions are known to those skilled in the art only because they are described in the background of this disclosure.

### Summary

The inventors found that current SRS carrier switching is not flexible enough and the SRS carrier switching operation needs to be enhanced.

In view of at least one of the above problems, embodiments of this disclosure provide an SRS carrier switching operation method and apparatus.

According to one aspect of embodiments of this disclosure, there is provided an SRS carrier switching operation method applied to a terminal equipment, including:
receiving, by the terminal equipment, indication information from a network device, wherein the indication information is used to trigger the terminal equipment to perform an SRS carrier switching operation; and
performing, by the terminal equipment, the SRS carrier switching operation according to the indication information.

According to another aspect of embodiments of this disclosure, there is provided an SRS carrier switching operation apparatus configured in a terminal equipment, including:
a receiving unit configured to receive indication information from a network device, wherein the indication information is used to trigger the terminal equipment to perform an SRS carrier switching operation; and
a processing unit configured to perform the SRS carrier switching operation according to the indication information.

According to another aspect of embodiments of this disclosure, there is provided an SRS carrier switching operation method applied to a network device, including:
transmitting, by the network device, indication information to a terminal equipment, wherein the indication information is used to trigger the terminal equipment to perform an SRS carrier switching operation.

According to another aspect of embodiments of this disclosure, there is provided an SRS carrier switching operation apparatus configured in a network device, including:
a transmitting unit configured to transmit indication information to a terminal equipment, wherein the indication information is used to trigger the terminal equipment to perform an SRS carrier switching operation.

According to another aspect of embodiments of this disclosure, there is provided a communication system, including:
a network device configured to transmit indication information to a terminal equipment, wherein the indication information is used to trigger the terminal equipment to perform an SRS carrier switching operation; and
the terminal equipment configured to perform the SRS carrier switching operation according to the indication information.

One of advantageous effects of embodiments of this disclosure is that the SRS carrier switching operation is enhanced, therefore flexibility is increased.

With reference to the following description and drawings, the particular embodiments of this disclosure are disclosed in detail, and the manners in which the principle of this disclosure can be used are indicated. It should be understood that the scope of the embodiments of this disclosure is not limited thereto. The embodiments of this disclosure contain many alternations, modifications and equivalents within the scope of the appended claims.

Features that are described and/or illustrated with respect to one embodiment may be used in a same way or in a similar way in one or more other embodiments and/or in combination with or instead of the features of the other embodiments.

It should be emphasized that the term "comprise/include" when used herein refers to the presence of features, integers, steps or components but does not preclude the presence or addition of one or more other features, integers, steps, or components.

### Brief Description of the Drawings

Elements and features depicted in one drawing or embodiment of this disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram illustrating a communication system in embodiments of this disclosure;
FIG. 2 is a schematic diagram illustrating an SRS carrier switching operation;
FIG. 3 is a schematic diagram illustrating an SRS carrier switching operation method in embodiments of this disclosure;
FIG. 4 is an example diagram illustrating an SRS carrier switching operation triggered by a DCI format 1_3 that schedules a PDSCH in embodiments of this disclosure;
FIG. 5 is a schematic diagram illustrating an SRS carrier switching operation method in embodiments of this disclosure;
FIG. 6 is a schematic diagram illustrating an SRS carrier switching operation apparatus in embodiments of this disclosure;
FIG. 7 is a schematic diagram illustrating an SRS carrier switching operation apparatus in embodiments of this disclosure;
FIG. 8 is a schematic diagram illustrating a network device in embodiments of this disclosure; and
FIG. 9 is a schematic diagram illustrating a terminal equipment in embodiments of this disclosure.

### Detailed Description

These and further features of this disclosure will be apparent with reference to the following description and drawings. In the description and drawings, particular embodiments of the disclosure have been disclosed in detail as being indicative of some of the embodiments in which the principles of the disclosure may be employed, but it should be understood that this disclosure is not limited to the embodiments described herein. Rather, this disclosure includes all alternations, modifications and equivalents falling within the scope of the appended claims.

In embodiments of this disclosure, terms "first", "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include", "have" refer to presence of stated features, elements, components, or assemblies, but do not exclude presence or addition of one or more other features, elements, components, or assemblies.

In embodiments of this disclosure, singular forms "a/an", "the", etc., include plural forms, and should be understood as "a kind of" or "a type of" in a broad sense, but should not be limited to a meaning of "one"; and the term "the" should be understood as including both a singular form and a plural form, except clearly specified otherwise. Furthermore, the term "according to" should be understood as "at least partially according to", the term "based on" should be understood as "at least partially based on", except clearly specified otherwise.

In embodiments of this disclosure, the term "communication network" or "wireless communication network" may refer to a network satisfying any one of communication standards, such as Long Term Evolution (LTE), Long Term Evolution-Advanced (LTE-A), Wideband Code Division Multiple Access (WCDMA), and High-Speed Packet Access (HSPA), etc.

Furthermore, communication between devices in a communication system may be performed according to communication protocols at any stage, which may, for example, include but not limited to the communication protocols: 1G (generation), 2G, 2.5G, 2.75G, 3G, 4G, 4.5G, and 5G, New Radio (NR) and 6G in the future, etc., and/or other communication protocols that are currently known or will be developed in the future.

In embodiments of this disclosure, the term "network device", for example, refers to a device in a communication system that accesses terminal equipment to a communication network and provides services for the terminal equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

A base station may include but not limited to a node B (NodeB or NB), an evolved node B (eNodeB or eNB), and a 5G base station (gNB), an IAB host, etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographic area. And a term "cell" may refer to a base station and/or its coverage area, depending on a context in which the term is used.

In embodiments of this disclosure, the term "user equipment" (UE) or "terminal equipment or terminal device" (TE) refers to, for example, equipment accessing to a communication network and receiving network services via a network device. The terminal equipment may be fixed or mobile, and may also be referred to as a mobile station (MS), a terminal, a subscriber station (SS), an access terminal (AT), a station, etc.

A terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of an Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment, except otherwise specified.

Scenarios of embodiments in this disclosure shall be described below by way of examples. However, this disclosure is not limited thereto.

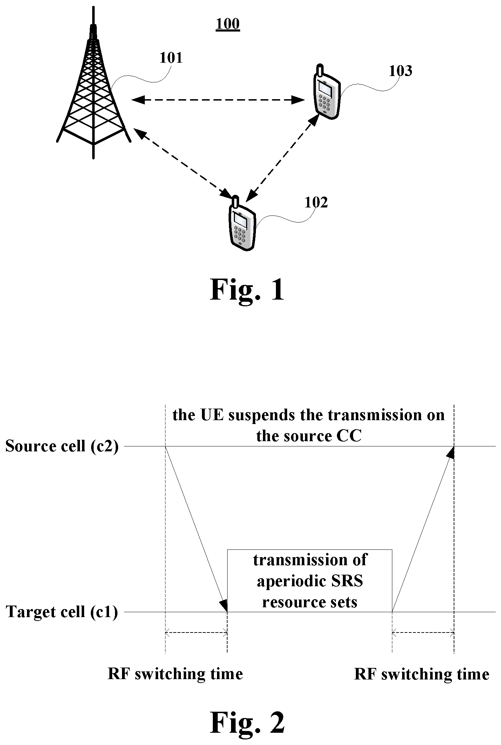

FIG. 1 is a schematic diagram illustrating a communication system in embodiments of this disclosure, which schematically illustrates a situation in which a terminal equipment and a network device are used as an example. As illustrated in the FIG. 1, a communication system 100 may include a network device 101 and terminal equipments 102 and 103. For the sake of simplicity, the FIG. 1 only illustrates two terminal equipments and one network device as an example, however, the embodiments of this disclosure are not limited thereto.

In embodiments of this disclosure, existing services or services that may be implemented in the future may be transmitted between the network device 101 and the terminal equipments 102 and 103. For example, these services may include but are not limited to: an enhanced Mobile Broadband (eMBB), a massive Machine Type Communication (mMTC), and an Ultra-Reliable and Low-Latency Communication (URLLC), etc.

It should be noted that the FIG. 1 illustrates that both the terminal equipments 102 and 103 fall within a coverage of the network device 101, however, this disclosure is not limited thereto. Both the terminal equipments 102 and 103 may not fall within the coverage of the network device 101, or one terminal equipment 102 falls within the coverage of the network device 101 and the other terminal equipment 103 falls out of the coverage of the network device 101.

FIG. 2 is a schematic diagram illustrating an SRS carrier switching operation. As illustrated in the FIG. 2, if the terminal equipment is not able to support simultaneous transmissions of PUSCH and SRS on a plurality of CCs (c1 and c2 illustrated in the FIG. 2), the terminal equipment needs to suspend a PUSCH uplink transmission on a source CC (such as c2, also referred to as a source cell) and switch to a target CC (such as c1, also referred to as a target cell) for SRS transmission. After transmitting the SRS, the terminal equipment switches back to the source CC. For the SRS carrier switching, an SRS resource set with usage set to "antennaSwitching" is used. And the SRS carrier switching is triggered by a DCI format 2_3.

In Rel-17, an available slot operation is introduced for aperiodic SRS transmission, and an available slot operation of SRS is applicable to a DCI format 0_1/0_2/1_1/1_2, and DCI 0_1/0_2 may schedule PUSCH or may not schedule PUSCH. However, the available slot operation is not applicable to a DCI format 2_3.

In addition, antenna configurations of 1T1R/1T2R/1T4R/2T2R/2T4R/4T4R are supported for an SRS antenna switching in Rel-16. The number of aperiodic SRS resource sets is at most two for an antenna switching. The antenna configurations are extended to 8Rx, including 1T6R/1T8R/2T6R/2T8R/4T8R for an SRS antenna switching in Rel-17. Up to 3 or 4 aperiodic SRS resource sets may be configured for 1T6R/1T8R/2T6R/2T8R, depending on whether the terminal equipment is able to transmit SRS only within the last 6 OFDM symbols in a slot, or whether the terminal equipment is able to transmit SRS on any symbol in the slot.

A gap symbol should be configured between two adjacent SRS resources for an SRS antenna switching. A length of a gap is Y symbols. If two SRS resource sets for the antenna switching are in consecutive slots, an inter-set gap symbol should be configured. Table 1 schematically shows a gap length (Y symbols) for the SRS antenna switching.

**Table 1**

| *µ* | *Δf* = *2^{µ}*·15 [kHz] | Y[symbol] |
|---|---|---|
| 0 | 15 | 1 |
| 1 | 30 | 1 |
| 2 | 60 | 1 |
| 3 | 120 | 2 |
| 5 | 480 | 7 |
| 6 | 960 | 14 |

A DCI format 0_3/1_3 is introduced for multi-carrier scheduling in Rel-18, that is, one DCI may schedule PDSCH/PUSCH transmission on a plurality of carriers.

In addition to a DCI format 2_3, whether a DCI format 1_1/1_2 is able to trigger an SRS carrier switching is still under discussion. Since DCI format 1_1/1_2 is used for PDSCH scheduling, the DCI format 1_1/1_2 may be used to trigger an SRS carrier switching operation on a PUSCH-less cell.

The inventors found that only UE behaviors of an SRS carrier switching operation triggered by a DCI format 2_3 are currently specified, in which an available slot operation is not applied. However, the available slot operation may be used for a DCI format 1_1/1_2. Therefore, if the DCI format 1_1/1_2 may be used to trigger the SRS carrier switching, it should be clarified whether or not the available slot operation is able to be applied.

In addition to the DCI format 2_3 and the DCI format 1_1/1_2, it should be clarified whether or not other DCI formats are also able to be used to trigger an SRS carrier switching operation, such as a DCI format 0_1/0_2 that does not schedule PUSCH, or a DCI format 1_3/0_3 for multi-carrier scheduling.

In addition, an SRS carrier switching is only applicable to one or two aperiodic SRS resource sets in the current specification. However, the number of aperiodic SRS resource sets for the antenna switching may be up to 4 in Rel-17. This means that some configurations do not support the carrier switching, which makes no sense. A restriction of one or two aperiodic SRS resource sets should be removed.

In addition, an inter-set gap may be configured for an SRS antenna switching. However, for an SRS carrier switching, if a gap between two SRS resource sets is greater than required switching time, a terminal equipment may switch back to a source CC. If the inter-set gap is configured, the terminal equipment should stay on a target CC during a gap symbol.

In embodiments of this disclosure, a higher layer signaling may be, for example, a radio resource control (RRC) signaling; for example, an RRC message, including, for example, an MIB, system information, a dedicated RRC message; or an RRC IE (RRC information element). The higher layer signaling may also be, for example, a MAC (Medium Access Control) signaling; or a MAC CE (MAC control element). However, this disclosure is not limited thereto.

In the description below, in a case where there exists no confusion, the terms "PDCCH" and "physical downlink control channel" or "downlink control information" may be interchanged, and the terms "PDSCH" and "physical downlink data channel" or "downlink data" may also be interchanged. In addition, transmitting or receiving a PDCCH may be understood as transmitting or receiving the downlink control information carried by the PDCCH; transmitting or receiving a PDSCH may be understood as transmitting or receiving the downlink data carried by the PDSCH.

### Embodiments of a first aspect

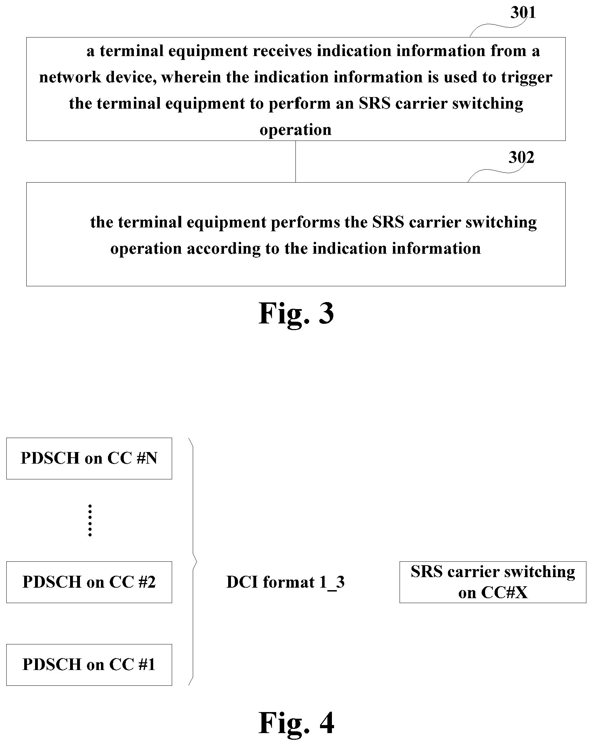

Embodiments of this disclosure provide an SRS carrier switching operation method described from a terminal equipment side. FIG. 3 is a schematic diagram illustrating an SRS carrier switching operation method in embodiments of this disclosure. As illustrated in the FIG. 3, the method includes:
301: a terminal equipment receives indication information from a network device, wherein the indication information is used to trigger the terminal equipment to perform an SRS carrier switching operation; and
302: the terminal equipment performs the SRS carrier switching operation according to the indication information.

It should be noted that the FIG. 3 only schematically illustrates embodiments of this disclosure, however, this disclosure is not limited thereto. For example, an order of execution of the operations may be appropriately adjusted, and some other operations may be added, or some operations therein may be removed. And appropriate variants may be made by those skilled in the art according to the above content, without being limited to the disclosure illustrated in the FIG. 3.

In some embodiments, the indication information is in a DCI format 1_1/1_2; and the SRS carrier switching operation is triggered by the DCI format 1_1/1_2 with an available slot operation is disabled.

In some embodiments, aperiodic SRS resource sets of all BWPs (BandWith Parts) on a target component carrier (CC) are not configured with an available slot parameter.

In some embodiments, the DCI format 1_1/1_2 is transmitted with a scheduling PDSCH.

In some embodiments, the DCI format 1_1/1_2 is transmitted without a scheduling PDSCH.

For example, an SRS carrier switching operation may be triggered by a DCI format 1_1/1_2 with an available slot operation is disabled. For example, none of aperiodic SRS resource sets on all BWPs on a target CC is configured with an availableSlotOffsetList parameter. In addition, the DCI format 1_1/1_2 may be transmitted with a scheduling PDSCH, or the DCI format 1_1/1_2 may be transmitted without the scheduling PDSCH.

Table 2 shows a case where an SRS carrier switching is triggered by a DCI format 1_1/1_2 without available slot operation.

**Table 2**

| |
|---|
| For an aperiodic SRS triggered in DCI format 2_3 and if the UE is configured with higher layer parameter *srs-TPC-PDCCH-Group* set to 'typeA', and given by *SRS-CarrierSwitching,* without PUSCH/PUCCH transmission, the order of the triggered SRS transmission on the serving cells follow the order of the serving cells in the indicated set of serving cells configured by higher layers, where the UE in each serving cell transmits the configured one or two SRS resource set(s) from *srs-ResourceSetToAddModList* with higher layer parameter *usage* set to 'antennaSwitching' and higher layer parameter *resourceType* in *SRS-ResourceSet* set to 'aperiodic'. |
| For an aperiodic SRS triggered in DCI format 2_3 and if the UE is configured with higher layer parameter *srs-TPC-PDCCH-Group* set to 'typeB' without PUSCH/PUCCH transmission, the order of the triggered SRS transmission on the serving cells follow the order of the serving cells with aperiodic SRS triggered in the DCI, and the UE in each serving cell transmits the configured one or two SRS resource set(s) from *srs-ResourceSetToAddModList* with higher layer parameter *usage* set to 'antennaSwitching' and higher layer parameter *resourceType* in *SRS-ResourceSet* set to 'aperiodic'. |
| For an aperiodic SRS triggered in DCI format 1_1/1_2, none of the aperiodic SRS resource sets across all the BWPs on carrier *c1* is configured with *availableSlotOffsetList* parameter. |

In some embodiments, the SRS carrier switching operation is triggered by a DCI format 1_1/1_2 with an available slot operation is disabled according to terminal equipment capability.

For example, the SRS carrier switching operation triggered by the DCI format 1_1/1_2 without available slot operation may depend on UE capability.

In some embodiments, the indication information is in a DCI format 1_1/1_2; the SRS carrier switching operation is triggered by the DCI format 1_1/1_2 with an available slot operation is enabled.

In some embodiments, the DCI format 1_1/1_2 is transmitted with a scheduling PDSCH.

In some embodiments, the DCI format 1_1/1_2 is transmitted without a scheduling PDSCH.

For example, an SRS carrier switching operation may be triggered by the DCI format 1_1/1_2 with available slot operation is enabled. The DCI format 1_1/1_2 may be transmitted with a scheduling PDSCH, or the DCI format 1_1/1_2 may be transmitted without a scheduling PDSCH.

In some embodiments, the SRS carrier switching operation is triggered by a DCI format 1_1/1_2 with an available slot operation is enabled according to terminal equipment capability.

For example, the SRS carrier switching operation triggered by the DCI format 1_1/1_2 with available slot operation may depend on UE capability.

In some embodiments, the indication information is in a DCI format 0_1/0_2; and the SRS carrier switching operation is triggered by the DCI format 0_1/0_2 without scheduling PUSCH.

In some embodiments, the available slot operation is enabled, or the available slot operation is disabled.

In some embodiments, a TPC command in the DCI format 0_1/0_2 is applied for an SRS transmission in the SRS carrier switching operation.

In some embodiments, the indication information is in the DCI format 0_1/0_2; the SRS carrier switching operation is not able to be triggered by the DCI format 0_1/0_2 without scheduling PUSCH.

In some embodiments, the SRS carrier switching operation is triggered by the DCI format 0_1/0_2 without scheduling PUSCH according to terminal equipment capability.

For example, the SRS carrier switching operation triggered by the DCI format 0_1/0_2 without scheduling PUSCH may depend on the UE capability.

In some embodiments, an available slot operation is enabled or disabled according to the terminal equipment capability.

For example, whether the available slot operation is able to be applied may also depend on the UE capability.

In some embodiments, the indication information is in a DCI format 1_3; the DCI format 1_3 is used to schedule a PDSCH transmission on a PUSCH-less cell and the SRS carrier switching operation is triggered by the DCI format 1_3.

FIG. 4 is an example diagram illustrating an SRS carrier switching operation triggered by a DCI format 1_3 scheduling PDSCH in embodiments of this disclosure. As illustrated in the FIG. 4, the DCI format 1_3 is used to schedule a PDSCH transmission (e.g., PDSCH on CC#1, ... #N as illustrated in the FIG. 4), and the SRS carrier switching operation (on CC#X as illustrated in the FIG. 4) is triggered by the DCI format 1_3.

In some embodiments, a TPC command in the DCI format 1_3 is applied for an SRS transmission on the PUSCH-less cell in the SRS carrier switching operation, and the TPC command corresponds to a scheduled CC of the SRS carrier switching operation.

For example, the TPC command included in the DCI format 1_3 corresponds to the scheduled CC of the SRS carrier switching, and the TPC command is able to be applied to an SRS transmission on a PUSCH-less cell during the SRS carrier switching operation.

In some embodiments, an available slot operation is applied to the SRS carrier switching operation for the DCI format 1_3.

In some embodiments, an available slot operation is not applied to the SRS carrier switching operation triggered by the DCI format 1_3.

In some embodiments, the SRS carrier switching operation triggered by the DCI format 1_3 with an available slot operation or without an available slot operation is up to terminal equipment capability.

For example, the SRS carrier switching operation triggered by the DCI format 1_3 with or without available slot operation may depend on the UE capability.

In some embodiments, the indication information is in a DCI format 0_3; and the SRS carrier switching operation is triggered by the DCI format 0_3 without scheduling PUSCH.

In some embodiments, a TPC command in the DCI format 0_3 is applied for an SRS transmission on a PUSCH-less cell in the SRS carrier switching operation, and the TPC command corresponds to a scheduled CC of the SRS carrier switching operation.

For example, the TPC command included in the DCI format 0_3 corresponds to the scheduled CC of the SRS carrier switching, and the TPC command is able to be applied for an SRS transmission on a PUSCH-less cell during the SRS carrier switching operation.

In some embodiments, an available slot operation is applied to the SRS carrier switching operation for a DCI format 0_3 without scheduling PUSCH.

In some embodiments, an available slot operation is not applied to the SRS carrier switching operation triggered by a DCI format 0_3 without scheduling PUSCH.

For example, for a DCI format 0_3 without scheduling PUSCH, an available slot operation is able to be applied to an SRS carrier switching operation; or an available slot operation is not applied to an SRS carrier switching operation triggered by the DCI format 0_3 without scheduling PUSCH.

In some embodiments, the SRS carrier switching operation triggered by the DCI format 0_3 with an available slot operation or without an available slot operation is up to terminal equipment capability.

For example, the SRS carrier switching operation triggered by the DCI format 0_3 with or without available slot operation may depend on the UE capability.

In some embodiments, the indication information is in a DCI format 0_3; the SRS carrier switching operation is triggered by a DCI format 0_3 without scheduling PUSCH on a PUSCH-less cell, and the DCI format 0_3 schedules a PUSCH transmission on other cells.

For example, the SRS carrier switching operation may be triggered by the DCI format 0_3 without scheduling PUSCH on the PUSCH-less cell, while the DCI format 0_3 may schedule the PUSCH transmission on other cells.

In some embodiments, a TPC command in the DCI format 0_3 is applied for an SRS transmission on a PUSCH-less cell in the SRS carrier switching operation, and the TPC command corresponds to a scheduled CC of the SRS carrier switching operation.

For example, the TPC command included in the DCI format 0_3 corresponds to the scheduled CC of the SRS carrier switching, and the TPC command is able to be applied for an SRS transmission on a PUSCH-less cell during the SRS carrier switching operation.

In some embodiments, an available slot operation is applied to the SRS carrier switching operation for the DCI format 0_3.

In some embodiments, an available slot operation is not applied to the SRS carrier switching operation triggered by a DCI format 0_3 scheduling a PUSCH transmission on other cells.

For example, an available slot operation may be applied to an SRS carrier switching operation; or an available slot operation may not be applied to an SRS carrier switching operation triggered by a DCI format 0_3 scheduling a PUSCH transmission on other cells.

In some embodiments, the SRS carrier switching operation triggered by the DCI format 0_3 scheduling the PUSCH transmission on other cells with an available slot operation or without an available slot operation is up to terminal equipment capability.

For example, the SRS carrier switching operation is triggered by the DCI format 0_3 that schedules the PUSCH transmission on other cells, and the SRS carrier switching operation with or without available slot operation may depend on the UE capability.

In some embodiments, whether an available slot operation is applied to the SRS carrier switching operation may depend on the terminal equipment capability.

In some embodiments, the terminal equipment capability is applied to one or more or all DCI formats that are able to trigger the SRS carrier switching operation.

For example, whether an available slot operation is able to be applied to the SRS carrier switching may depend on the UE capability. The UE capability may be applied to one or more or all the DCI formats that are able to trigger the SRS carrier switching operation.

In some embodiments, more than two aperiodic SRS resource set configurations are supported for the SRS carrier switching operation; and restrictions on one or two aperiodic SRS resource sets for the SRS carrier switching operation are removed.

For example, configurations of more than two aperiodic SRS resource sets (e.g., more than two aperiodic RS resource sets for 1T8R/1T6R/2T8R/2T6R) are supported for the SRS carrier switching operation. Alternatively, the restrictions on one or two aperiodic SRS resource sets for the SRS carrier switching are removed.

Table 3 shows one example of removing the restriction of the SRS carrier switching. As shown in Table 3, the restriction of "one or two" is removed.

**Table 3**

| |
|---|
| For an aperiodic SRS triggered in DCI format 2_3 and if the UE is configured with higher layer parameter *srs-TPC-PDCCH-Group* set to 'typeA', and given by *SRS-CarrierSwitching,* without PUSCH/PUCCH transmission, the order of the triggered SRS transmission on the serving cells follow the order of the serving cells in the indicated set of serving cells configured by higher layers, where the UE in each serving cell transmits the configured SRS resource set(s) from *srs-ResourceSetToAddModList* with higher layer parameter *usage* set to 'antennaSwitching' and higher layer parameter *resourceType* in *SRS-ResourceSet* set to 'aperiodic'. |
| For an aperiodic SRS triggered in DCI format 2_3 and if the UE is configured with higher layer parameter *srs-TPC-PDCCH-Group* set to 'typeB' without PUSCH/PUCCH transmission, the order of the triggered SRS transmission on the serving cells follow the order of the serving cells with aperiodic SRS triggered in the DCI, and the UE in each serving cell transmits the configured SRS resource set(s) from *srs-ResourceSetToAddModList* with higher layer parameter *usage* set to 'antennaSwitching' and higher layer parameter *resourceType* in *SRS-ResourceSet* set to 'aperiodic'. |

Table 4 shows another example of removing the restriction of the SRS carrier switching. As shown in Table 4, the restriction of "one or two" is replaced by "up to four".

**Table 4**

| |
|---|
| For an aperiodic SRS triggered in DCI format 2_3 and if the UE is configured with higher layer parameter *srs-TPC-PDCCH-Group* set to 'typeA', and given by *SRS-CarrierSwitching,* without PUSCH/PUCCH transmission, the order of the triggered SRS transmission on the serving cells follow the order of the serving cells in the indicated set of serving cells configured by higher layers, where the UE in each serving cell transmits the configured **up to four** SRS resource set(s) from *srs-ResourceSetToAddModList* with higher layer parameter *usage* set to 'antennaSwitching' and higher layer parameter *resourceType* in *SRS-ResourceSet* set to 'aperiodic'. |
| For an aperiodic SRS triggered in DCI format 2_3 and if the UE is configured with higher layer parameter *srs-TPC-PDCCH-Group* set to 'typeB' without PUSCH/PUCCH transmission, the order of the triggered SRS transmission on the serving cells follow the order of the serving cells with aperiodic SRS triggered in the DCI, and the UE in each serving cell transmits the configured **up to four** SRS resource set(s) from *srs-ResourceSetToAddModList* with higher layer parameter *usage* set to 'antennaSwitching' and higher layer parameter *resourceType* in *SRS-ResourceSet* set to 'aperiodic'. |

In some embodiments, if an inter-set gap symbol is configured for the SRS carrier switching operation, the terminal equipment stays on a target CC during the inter-set gap symbol.

For example, for an SRS carrier switching operation, if an inter-set gap symbol is configured, the UE should stay on a target CC during the inter-set gap symbol. For another example, if an inter-set gap is equal to Y symbols as shown in Table 1, the UE should stay on a target CC during the inter-set gap symbol.

The above embodiments only illustrate the disclosure. However, this disclosure is not limited thereto, and appropriate variants may be made on the basis of the above embodiments. For example, the above embodiments may be used alone, or one or more of the above embodiments may be combined together.

As can be seen from the above embodiments, the SRS carrier switching operation is enhanced, thereby increasing flexibility.

### Embodiments of a second aspect

Embodiments of this disclosure provide an SRS carrier switching operation method described from a network device side. The embodiments of the second aspect can be combined with the embodiments of the first aspect. Same contents as those of the embodiments of the first aspect will not be described again.

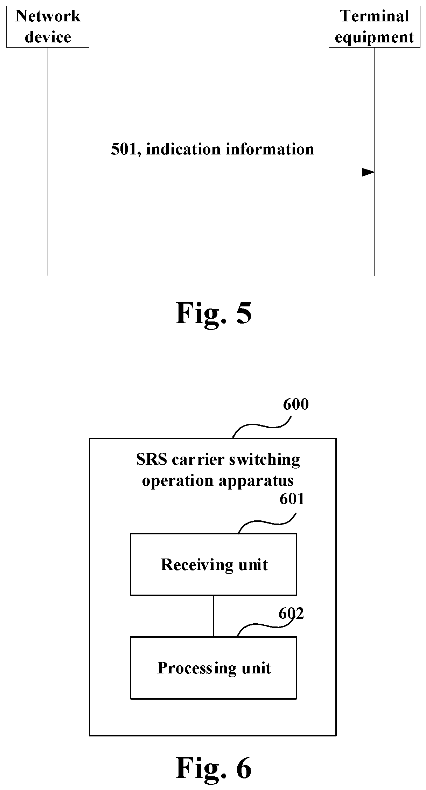

FIG. 5 is a schematic diagram illustrating an SRS carrier switching operation method in embodiments of this disclosure. As illustrated in the FIG. 5, the method includes:
501: a network device transmits indication information to a terminal equipment, wherein the indication information is used to trigger the terminal equipment to perform an SRS carrier switching operation.

It should be noted that the FIG. 5 only schematically illustrates embodiments of this disclosure, however, this disclosure is not limited thereto. For example, an order of execution of the operations may be appropriately adjusted, and furthermore, some other operations may be added, or some operations therein may be removed. And appropriate variants may be made by those skilled in the art according to the above content, without being limited to the disclosure illustrated in the FIG. 5.

The above embodiments only schematically illustrate the disclosure. However, this disclosure is not limited thereto, and appropriate variants may be made on the basis of the above embodiments. For example, the above embodiments may be implemented separately, or one or more of the above embodiments may be combined together.

As can be seen from the above embodiments, the SRS carrier switching operation is enhanced, thereby increasing flexibility.

### Embodiments of a third aspect

Embodiments of this disclosure provide an SRS carrier switching operation apparatus. The apparatus may be, for example, a terminal equipment, or may be one or more components or assemblies configured in the terminal equipment. Same contents as those of the embodiments of the first aspect will not be described again.

FIG. 6 is a schematic diagram illustrating an SRS carrier switching operation apparatus in embodiments of this disclosure. As illustrated in the FIG. 6, an SRS carrier switching operation apparatus 600 includes:
a receiving unit 601 configured to receive indication information from a network device, wherein the indication information is used to trigger the terminal equipment to perform an SRS carrier switching operation; and
a processing unit 602 configured to perform the SRS carrier switching operation according to the indication information.

In some embodiments, the indication information is in a DCI format 1_1/1_2; and the SRS carrier switching operation is triggered by the DCI format 1_1/1_2 with an available slot operation is disabled.

In some embodiments, aperiodic SRS resource sets of all BWPs on a target component carrier (CC) are not configured with an available slot parameter.

In some embodiments, the DCI format 1_1/1_2 is transmitted with a scheduling PDSCH.

In some embodiments, the DCI format 1_1/1_2 is transmitted without a scheduling PDSCH.

In some embodiments, the SRS carrier switching operation is triggered by the DCI format 1_1/1_2 with an available slot operation is disabled according to terminal equipment capability.

In some embodiments, the indication information is in a DCI format 1_1/1_2; and the SRS carrier switching operation is triggered by the DCI format 1_1/1_2 with an available slot operation is enabled.

In some embodiments, the DCI format 1_1/1_2 is transmitted with a scheduling PDSCH.

In some embodiments, the DCI format 1_1/1_2 is transmitted without a scheduling PDSCH.

In some embodiments, the SRS carrier switching operation is triggered by the DCI format 1_1/1_2 with an available slot operation is enabled according to terminal equipment capability.

In some embodiments, the indication information is in a DCI format 0_1/0_2; and the SRS carrier switching operation is triggered by the DCI format 0_1/0_2 without scheduling PUSCH.

In some embodiments, an available slot operation is enabled, or an available slot operation is disabled.

In some embodiments, a TPC command in the DCI format 0_1/0_2 is applied for an SRS transmission in the SRS carrier switching operation.

In some embodiments, the indication information is in a DCI format 0_1/0_2; the SRS carrier switching operation is not able to be triggered by the DCI format 0_1/0_2 without scheduling PUSCH.

In some embodiments, the SRS carrier switching operation is triggered by the DCI format 0_1/0_2 without scheduling PUSCH according to terminal equipment capability.

In some embodiments, an available slot operation is enabled or disabled according to terminal equipment capability.

In some embodiments, the indication information is in a DCI format 1_3, the DCI format 1_3 is used to schedule a PDSCH transmission on a PUSCH-less cell and the SRS carrier switching operation is triggered by the DCI format 1_3.

In some embodiments, a TPC command in the DCI format 1_3 is applied for an SRS transmission on a PUSCH-less cell in the SRS carrier switching operation, and the TPC command corresponds to a scheduled CC of the SRS carrier switching operation.

In some embodiments, for the DCI format 1_3, an available slot operation is applied to the SRS carrier switching operation; or an available slot operation is not applied to the SRS carrier switching operation triggered by the DCI format 1_3.

In some embodiments, the SRS carrier switching operation triggered by the DCI format 1_3 with an available slot operation or without an available slot operation is up to terminal equipment capability.

In some embodiments, the indication information is in a DCI format 0_3; and the SRS carrier switching operation is triggered by the DCI format 0_3 without scheduling PUSCH.

In some embodiments, a TPC command in the DCI format 0_3 is applied for an SRS transmission on a PUSCH-less cell in the SRS carrier switching operation, and the TPC command corresponds to a scheduled CC of the SRS carrier switching operation.

In some embodiments, for a DCI format 0_3 without scheduling PUSCH, an available slot operation is applied to the SRS carrier switching operation; or an available slot operation is not applied to the SRS carrier switching operation triggered by the DCI format 0_3 without scheduling PUSCH.

In some embodiments, the SRS carrier switching operation triggered by the DCI format 0_3 with an available slot operation or without an available slot operation is up to terminal equipment capability.

In some embodiments, the indication information is in a DCI format 0_3; the SRS carrier switching operation is triggered by the DCI format 0_3 without scheduling PUSCH on a PUSCH-less cell, and the DCI format 0_3 schedules a PUSCH transmission on other cells.

In some embodiments, a TPC command in the DCI format 0_3 is applied for an SRS transmission on a PUSCH-less cell in the SRS carrier switching operation, and the TPC command corresponds to a scheduled CC of the SRS carrier switching operation.

In some embodiments, for the DCI format 0_3, an available slot operation is applied to the SRS carrier switching operation; or an available slot operation is not applied to the SRS carrier switching operation triggered by a DCI format 0_3 scheduling a PUSCH transmission on other cells.

In some embodiments, the SRS carrier switching operation triggered by a DCI format 0_3 scheduling a PUSCH transmission on other cells with an available slot operation or without an available slot operation is up to terminal equipment capability.

In some embodiments, whether an available slot operation is applied to the SRS carrier switching operation may depend on terminal equipment capability.

In some embodiments, the terminal equipment capability is applied to one or more or all DCI formats that are able to trigger the SRS carrier switching operation.

In some embodiments, more than two aperiodic SRS resource set configurations are supported for the SRS carrier switching operation.

In some embodiments, restrictions on one or two aperiodic SRS resource sets for the SRS carrier switching operation are removed.

In some embodiments, for the SRS carrier switching operation, if an inter-set gap symbol is configured, the terminal equipment stays on a target CC during the inter-set gap symbol.

The above embodiments only illustrate the disclosure. However, this disclosure is not limited thereto, and appropriate variants may be made on the basis of the above embodiments. For example, the above embodiments may be used alone, or one or more of the above embodiments may be combined together.

It should be noted that the components or modules related to this disclosure are only described above, however, this disclosure is not limited thereto. The SRS carrier switching operation apparatus 600 may also include other components or modules. Refer to the related arts for the specific content of these components or modules.

In addition, for the sake of simplicity, the FIG. 6 only illustrates a connection relationship or a signaling direction between components or modules, however, those skilled in the art should appreciate that the related arts such as bus connections can be adopted. The components or modules can be implemented by hardware facilities, such as a processor, a memory, a transmitter, a receiver, which is not limited in this disclosure.

As can be seen from the above embodiments, the SRS carrier switching operation is enhanced, thereby increasing flexibility.

### Embodiments of a fourth aspect

Embodiments of this disclosure provide an SRS carrier switching operation apparatus. The apparatus may be, for example, a network device, or may be one or more components or assemblies configured in the network device. Same contents as those of the embodiments of the first and second aspects will not be described again.

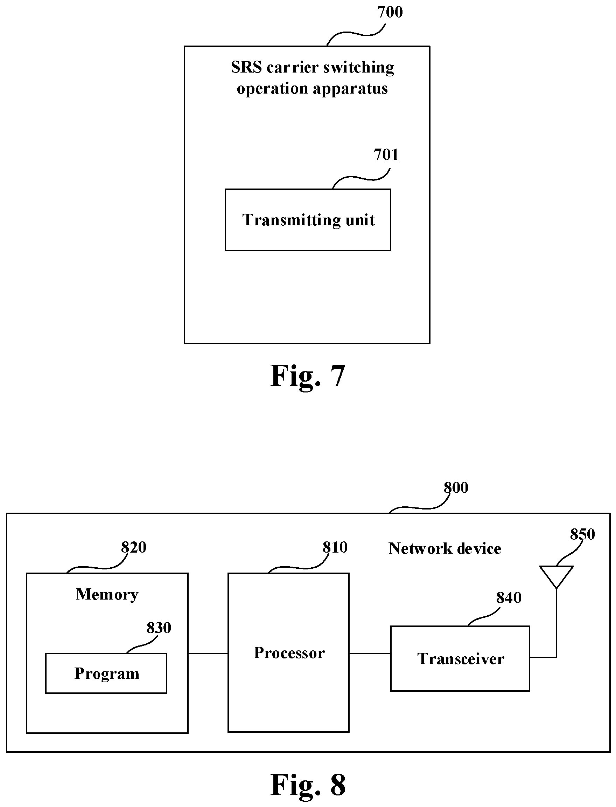

FIG. 7 is a schematic diagram illustrating an SRS carrier switching operation apparatus in embodiments of this disclosure. As illustrated in the FIG. 7, an SRS carrier switching operation apparatus 700 includes:
a transmitting unit 701 configured to transmit indication information to a terminal equipment, wherein the indication information is used to trigger the terminal equipment to perform an SRS carrier switching operation.

It should be noted that the components or modules related to this disclosure are only described above, however, this disclosure is not limited thereto. The SRS carrier switching operation apparatus 700 may also include other components or modules. Refer to the related arts for the specific content of these components or modules.

In addition, for the sake of simplicity, the FIG. 7 only illustrates a connection relationship or a signaling direction between components or modules, however, those skilled in the art should appreciate that the related arts such as bus connections can be adopted. The components or modules can be implemented by hardware facilities, such as a processor, a memory, a transmitter, and a receiver, which is not limited in this disclosure.

As can be seen from the above embodiments, the SRS carrier switching operation is enhanced, thereby increasing flexibility.

### Embodiments of a fifth aspect

Embodiments of this disclosure also provide a communication system. Reference may be made to the FIG. 1. Same contents as those of the embodiments of the first to fourth aspects will not be described again.

In some embodiments, the communication system 100 may at least include:
a network device configured to transmit indication information to a terminal equipment, wherein the indication information is used to trigger the terminal equipment to perform an SRS carrier switching operation; and
the terminal equipment configured to perform the SRS carrier switching operation according to the indication information.

Embodiments of this disclosure further provide a network device, which may be, for example, a base station, however, this disclosure is not limited thereto, and other network devices may also be involved.

FIG. 8 is a schematic diagram illustrating a composition of a network device in embodiments of this disclosure. As illustrated in the FIG. 8, a network device 800 may include a processor 810 (e.g., a central processing unit (CPU)) and a memory 820 coupled to the processor 810. The memory 820 may store various data. In addition, the memory 820 may store a program 830 for information processing, and the program 830 may be executed under the control of the processor 810.

For example, the processor 810 may be configured to execute a program to implement the SRS carrier switching operation method according to the embodiments of the second aspect. For example, the processor 810 may be configured to transmit indication information to a terminal equipment, wherein the indication information is used to trigger the terminal equipment to perform an SRS carrier switching operation.

In addition, as illustrated in the FIG. 8, the network device 800 may further include: a transceiver 840 and an antenna 850, wherein the functions of the above components are similar to those in the relevant art and will not be described in detail herein. It should be noted that the network device 800 does not necessarily include all the components illustrated in the FIG. 8. In addition, the network device 800 may also include components not illustrated in the FIG. 8. Please refer to the relevant art.

Embodiments of this disclosure also provide a terminal equipment, however, this disclosure is not limited thereto, and other devices may also be involved.

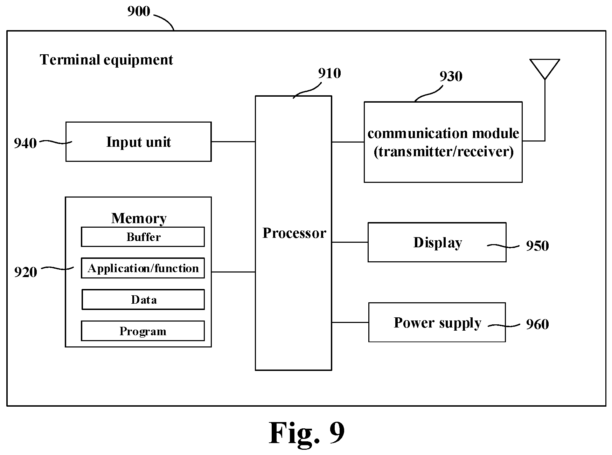

FIG. 9 is a schematic diagram illustrating a terminal equipment in embodiments of this disclosure. As illustrated in the FIG. 9, a terminal equipment 900 may include a processor 910 and a memory 920 that stores data and a program and is coupled to the processor 910. It should be noted that this figure is exemplary; and other types of structures may also be used to supplement or replace this structure, in order to implement telecommunication functions or other functions.

For example, the processor 910 may be configured to execute a program to implement the SRS carrier switching operation method according to the embodiments of the first aspect. For example, the processor 910 may be configured to receive indication information from a network device, wherein the indication information is used to trigger the terminal equipment to perform an SRS carrier switching operation; and perform the SRS carrier switching operation according to the indication information.

As illustrated in the FIG. 9, the terminal equipment 900 may further include: a communication module 930, an input unit 940, a display 950, and a power supply 960. The functions of the above components are similar to those in the relevant art and will not be described in detail herein. It should be noted that the terminal equipment 900 does not necessarily include all the components illustrated in the FIG. 9, and the above components are not necessarily required. In addition, the terminal equipment 900 may also include the components not illustrated in the FIG. 9. Please refer to the relevant art.

Embodiments of this disclosure also provide a computer program, wherein when the program is executed in a terminal equipment, the program enables the terminal equipment to perform the SRS carrier switching operation method according to the embodiments of the first aspect.

Embodiments of this disclosure also provide a storage medium storing a computer program, wherein the computer program enables a terminal equipment to perform the SRS carrier switching operation method according to the embodiments of the first aspect.

Embodiments of this disclosure also provide a computer program, wherein when the program is executed in a network device, the program enables the network device to perform the SRS carrier switching operation method according to the embodiments of the second aspect.

Embodiments of this disclosure further provide a storage medium storing a computer program, wherein the computer program enables a network device to perform the SRS carrier switching operation method according to the embodiments of the second aspect.

The above device and method of this disclosure may be implemented by hardware, or by hardware in combination with software. This disclosure relates to such a computer-readable program that when the program is executed by a logic device, the logic device is enabled to carry out the device or components as described above, or to carry out the method or steps as described above. This disclosure also relates to a storage medium for storing the above program, such as a hard disk, a magnetic disk, a CD, a DVD, and a flash memory, etc.

The method/device described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And these hardware modules, for example, may be carried out by firming these soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this disclosure. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to implementations containing the above embodiments, supplements are further disclosed below:
1. An SRS carrier switching operation method applied to a terminal equipment, including:
   receiving, by a terminal equipment, indication information from a network device, wherein the indication information is used to trigger the terminal equipment to perform an SRS carrier switching operation; and
   performing, by the terminal equipment, the SRS carrier switching operation according to the indication information.
2. An SRS carrier switching operation method applied to a network device, including:
   transmitting, by a network device, indication information to a terminal equipment, wherein the indication information is used to trigger the terminal equipment to perform an SRS carrier switching operation.
3. A terminal equipment, including: a memory and a processor, wherein the memory stores a computer program, and the processor is configured to execute the computer program to implement the SRS carrier switching operation method as claimed in supplement 1.
4. A network device, including: a memory and a processor, wherein the memory stores a computer program, and the processor is configured to execute the computer program to implement the SRS carrier switching operation method as claimed in supplement 2.

## Claims

1. An SRS (sounding reference signal) carrier switching operation apparatus, configured in a terminal equipment, comprising:
a receiving unit configured to receive indication information from a network device, wherein the indication information is used to trigger the terminal equipment to perform an SRS carrier switching operation; and
a processing unit configured to perform the SRS carrier switching operation according to the indication information.

2. The apparatus according to claim 1, wherein the indication information is in a DCI format 1_1/1_2; the SRS carrier switching operation is triggered by the DCI format 1_1/1_2 with an available slot operation is disabled;
aperiodic SRS resource sets of all BWPs on a target component carrier are not configured with an available slot parameter;
the DCI format 1_1/1_2 is transmitted with a scheduling PDSCH, or the DCI format 1_1/1_2 is transmitted without a scheduling PDSCH.

3. The apparatus according to claim 1, wherein the SRS carrier switching operation is triggered by a DCI format 1_1/1_2 with an available slot operation is disabled according to terminal equipment capability.

4. The apparatus according to claim 1, wherein the indication information is in a DCI format 1_1/1_2; the SRS carrier switching operation is triggered by a DCI format 1_1/1_2 with an available slot operation is enabled;
the DCI format 1_1/1_2 is transmitted with a scheduling PDSCH, or the DCI format 1_1/1_2 is transmitted without a scheduling PDSCH.

5. The apparatus according to claim 1, wherein the SRS carrier switching operation is triggered by a DCI format 1_1/1_2 with an available slot operation is enabled according to terminal equipment capability.

6. The apparatus according to claim 1, wherein the indication information is in a DCI format 0_1/0_2; the SRS carrier switching operation is triggered by the DCI format 0_1/0_2 without scheduling PUSCH;
an available slot operation is enabled, or an available slot operation is disabled;
a TPC command in the DCI format 0_1/0_2 is applied for an SRS transmission in the SRS carrier switching operation.

7. The apparatus according to claim 1, wherein the indication information is in a DCI format 0_1/0_2; and the SRS carrier switching operation is not able to be triggered by the DCI format 0_1/0_2 without scheduling PUSCH.

8. The apparatus according to claim 1, wherein the SRS carrier switching operation is triggered by a DCI format 0_1/0_2 without scheduling PUSCH according to terminal equipment capability;
an available slot operation is enabled or disabled according to terminal equipment capability.

9. The apparatus according to claim 1, wherein the indication information is in a DCI format 1_3; wherein the DCI format 1_3 is used to schedule a PDSCH transmission on a PUSCH-less cell and the SRS carrier switching operation is triggered by the DCI format 1_3;
a TPC command in the DCI format 1_3 is applied for an SRS transmission on the PUSCH-less cell in the SRS carrier switching operation, and the TPC command corresponds to a scheduled CC of the SRS carrier switching operation;
for the DCI format 1_3, an available slot operation is applied to the SRS carrier switching operation; or the available slot operation is not applied to the SRS carrier switching operation triggered by the DCI format 1_3.

10. The apparatus according to claim 1, wherein the SRS carrier switching operation triggered by a DCI format 1_3 with an available slot operation or without an available slot operation is up to terminal equipment capability.

11. The apparatus according to claim 1, wherein the indication information is in a DCI format 0_3; the SRS carrier switching operation is triggered by the DCI format 0_3 without scheduling PUSCH;
a TPC command in the DCI format 0_3 is applied for an SRS transmission on a PUSCH-less cell in the SRS carrier switching operation, and the TPC command corresponds to a scheduled CC of the SRS carrier switching operation;
for the DCI format 0_3 without scheduling PUSCH, an available slot operation is applied to the SRS carrier switching operation; or the available slot operation is not applied to the SRS carrier switching operation triggered by the DCI format 0_3 without scheduling PUSCH.

12. The apparatus according to claim 1, wherein the SRS carrier switching operation triggered by a DCI format 0_3 with an available slot operation or without an available slot operation is up to terminal equipment capability.

13. The apparatus according to claim 1, wherein the indication information is in a DCI format 0_3; the SRS carrier switching operation is triggered by the DCI format 0_3 without scheduling PUSCH on a PUSCH-less cell, and the DCI format 0_3 schedules a PUSCH transmission on other cells.

14. The apparatus according to claim 13, wherein a TPC command in the DCI format 0_3 is applied for an SRS transmission on the PUSCH-less cell in the SRS carrier switching operation, and the TPC command corresponds to a scheduled CC of the SRS carrier switching operation;
for the DCI format 0_3, an available slot operation is applied to the SRS carrier switching operation; or the available slot operation is not applied to the SRS carrier switching operation triggered by the DCI format 0_3 scheduling a PUSCH transmission on other cells.

15. The apparatus according to claim 1, wherein the SRS carrier switching operation triggered by a DCI format 0_3 scheduling a PUSCH transmission on other cells with an available slot operation or without an available slot operation is up to terminal equipment capability.

16. The apparatus according to claim 1, wherein whether an available slot operation is applied to the SRS carrier switching operation is up to terminal equipment capability;
the terminal equipment capability is applied to one or more or all DCI formats that are able to trigger the SRS carrier switching operation.

17. The apparatus according to claim 1, wherein more than two aperiodic SRS resource set configurations are supported for the SRS carrier switching operation;
restrictions on one or two aperiodic SRS resource sets for the SRS carrier switching operation are removed.

18. The apparatus according to claim 1, wherein for the SRS carrier switching operation, an inter-set gap symbol is configured, and the terminal equipment stays on a target CC during the inter-set gap symbol.

19. An SRS carrier switching operation apparatus, configured in a network device, comprising:
a transmitting unit configured to transmit indication information to a terminal equipment, wherein the indication information is used to trigger the terminal equipment to perform an SRS carrier switching operation.

20. A communication system, comprising:
a network device configured to transmit indication information to a terminal equipment, wherein the indication information is used to trigger the terminal equipment to perform an SRS carrier switching operation; and
the terminal equipment configured to perform the SRS carrier switching operation according to the indication information.
